# EUROPEAN PATENT APPLICATION

(11) **EP 4 224 289 A1**
(43) Date of publication of application: **09.08.2023**
(21) Application number: 22155557.6
(22) Date of filing: 08.02.2022
(51) Int. Cl.: G06F 3/01

(54) **MEDIATED REALITY**

(71) Applicant: Nokia Technologies Oy, 02610 Espoo (FI)
(72) Inventor: LEHTINIEMI, Arto Juhani, 33880 Lempäälä (FI); MATE, Sujeet Shyamsundar, 33720 Tampere (FI); LEPPÄNEN, Jussi Artturi, 33580 Tampere (FI)
(74) Representative: Nokia EPO representatives

(57) **Abstract**

An apparatus comprising means for:
in a first mode, controlling rendering of content to provide an augmented reality scene that continuously varies with a point of view that has a zero offset from a real point of view of a user; and
in a second mode, controlling rendering of content to provide a virtual reality scene that is a simulated augmented reality scene that continuously varies with a point of view that has a non-zero offset from the real point of view of the user, wherein the simulated augmented reality scene is defined by the point of view that has the non-zero offset from the real point of view.

## Description

### TECHNOLOGICAL FIELD

Embodiments of the present disclosure relate to mediated reality.

### BACKGROUND

Mediated Reality enables a user to experience, for example visually, a fully or partially artificial environment as a virtual scene at least partially rendered by an apparatus to a user. Augmented reality and virtual reality are examples of mediated reality.

In an augmented reality, a real see-through scene is augmented with a partially overlapping virtual scene that continuously varies with a real point of view of a user so that the virtual scene and the real see-through scene are in correspondence.

In virtual reality, a virtual scene continuously varies with a virtual point of view within a virtual space and that virtual point of view varies with the real point of view of the user.

The virtual point of view can be defined by a virtual location in the virtual space and a virtual orientation within the virtual space.

Virtual reality has an advantage over augmented reality in that a teleport can be performed in virtual reality. A teleport, in virtual reality, is a discrete change in the virtual point of view that does not correspond to a change in the real point of view of the user. The teleport can be a discrete jump in location and/or orientation.

### BRIEF SUMMARY

According to various, but not necessarily all, embodiments there is provided an apparatus comprising means for:
in a first mode, controlling rendering of content to provide an augmented reality scene that continuously varies with a point of view that has a zero offset from a real point of view of a user; and
in a second mode, controlling rendering of content to provide a virtual reality scene that is a simulated augmented reality scene that continuously varies with a point of view that has a non-zero offset from the real point of view of the user, wherein the simulated augmented reality scene is defined by the point of view that has the non-zero offset from the real point of view.

In some but not necessarily all examples, the apparatus comprises means for:
determining an offset between a target point of view and the real point of view of the user; and determining whether to operate in the first mode or the second mode in dependence upon the determined offset.

In some but not necessarily all examples, the determining whether to operate in the first mode or the second mode in dependence upon the determined offset comprises determining to operate in the second mode when the determined offset is greater than a threshold value.

In some but not necessarily all examples, the apparatus comprises means for, in second mode: monitoring the offset between the point of view that determines the simulated augmented reality scene and the real point of view; and
determining whether to switch from the second mode to the first mode in dependence upon the monitored offset.

In some but not necessarily all examples, the determining whether to switch from the second mode to the first mode in dependence upon the monitored offset comprises determining to switch to operate in the first mode when the monitored offset is zero.

In some but not necessarily all examples, the apparatus comprises means for setting the monitored offset to zero, when the monitored offset becomes less than a threshold value.

In some but not necessarily all examples, the apparatus comprises means for, in the second mode, indicating alternative points of view that can be adopted by the user to switch from the second mode to the first mode.

In some but not necessarily all examples, the apparatus comprises means for causing rendering of a virtual element that was rendered in the augmented reality scene before a transition from the first mode to the second mode in the simulated augmented reality scene.

In some but not necessarily all examples, the apparatus comprises means for causing
a transition between the first mode and the second mode configured to cause a transition from an augmented reality scene defined by the real point of view to a simulated augmented reality scene defined by the point of view that has a non-zero offset from the real point of view through a series of simulated augmented reality scenes defined by a series of points of view that have increasing, intermediate non-zero offsets from the real point of view.

In some but not necessarily all examples, the apparatus comprises means for causing
a transition between the first mode and the second mode configured to cause a transition to an augmented reality scene defined by the real point of view from
a simulated augmented reality scene defined by the point of view that has a non-zero offset from the real point of view through a series of simulated augmented reality scenes defined by a series of points of view that have decreasing, intermediate non-zero offsets from the real point of view.

In some but not necessarily all examples, the apparatus comprises means for causing
a transition between the first mode and the second mode by causing a transition between an augmented reality scene defined by the real point of view and
a simulated augmented reality scene defined by the point of view that has a non-zero offset from the real point of view, wherein a consistent transition effect is applied to the augmented reality scene and the simulated augmented reality scene.

In some but not necessarily all examples, controlling rendering of content to provide the augmented reality scene that continuously varies with a real point of view of a user comprises: not rendering content for see-through portions of the augmented reality scene to a real scene and
rendering at least one first virtual element as if at a position in the real scene wherein a change in the real point of view causes a corresponding change in rendering the at least one first virtual element such that it remains as if at the position in the real scene;
and
   wherein controlling rendering of content to provide a virtual reality scene that is a simulated augmented reality scene that continuously varies with the real point of view of the user, comprises:
   rendering content to provide a virtual reality scene that continuously with a virtual point of view that has a non-zero offset from the real point of view of a user, wherein the virtual reality scene simulates a real scene from a notional real point of view corresponding to the virtual point of view;
   rendering at least one second virtual element at a position in the virtual scene as if at a position in the real scene;
wherein a change in the real point of view causes a corresponding change in the virtual point of view to a new virtual point of view and a corresponding change in rendering the virtual reality scene comprising the at least one second virtual element, wherein the virtual scene simulates the real scene from a new notional real point of view corresponding to the new virtual point of view such that the at least one second virtual element remains at the position in the virtual space as if at the position in the real scene.

In some but not necessarily all examples, the apparatus is configured, in the second mode, to enable a teleport by enabling a change in the non-zero offset of the point of view defining the simulated augmented reality scene from the real point of view.

In some but not necessarily all examples, the change in the non-zero offset is constrained to enable traversal of a continuous real space rather than jumping between disjoint real spaces.

According to various, but not necessarily all, embodiments there is provided a computer program that, when run on a computer, performs:
in a first mode, controlling rendering of content to provide an augmented reality scene that continuously varies with a real point of view of a user; and
in a second mode, controlling rendering of content to provide a virtual reality scene that is a simulated augmented reality scene that continuously varies with the real point of view of the user, wherein the simulated augmented reality scene is defined by a point of view that has a non-zero offset from the real point of view.

According to various, but not necessarily all, embodiments there is provided a method comprising:
in a first mode, controlling rendering of content to provide an augmented reality scene that continuously varies with a real point of view of a user; and
in a second mode, controlling rendering of content to provide a virtual reality scene that is a simulated augmented reality scene that continuously varies with the real point of view of the user, wherein the simulated augmented reality scene is defined by a point of view that has a non-zero offset from the real point of view.

According to various, but not necessarily all, embodiments there is provided an apparatus comprising means for:
in a first mode, controlling rendering of content to provide an augmented reality scene that continuously varies with a real point of view of a user; and
in a second mode, controlling rendering of content to provide a virtual reality scene that is a simulated augmented reality scene that continuously varies with the real point of view of the user, wherein the simulated augmented reality scene is defined by a point of view that has a non-zero offset from the real point of view.

According to various, but not necessarily all, embodiments there is provided an apparatus comprising means for:
controlling rendering of content to provide an augmented reality scene that continuously varies with a real point of view of a user comprising:
   not rendering content for see-through portions of the augmented reality scene to a real scene and
   rendering at least one first virtual element as if at a position in the real scene; wherein a change in the real point of view causes a corresponding change in rendering the at least one first virtual element such that it remains as if at the position in the real scene; and
controlling rendering of content to provide a virtual reality scene that continuously varies with a virtual point of view that has a non-zero offset from the real point of view of a user comprising:
   rendering content to replace the real scene in the virtual reality scene wherein the virtual scene simulates the real scene from a notional real point of view corresponding to the virtual point of view;
   rendering at least one second virtual element at a position in the virtual scene as if at a position in the real scene;
   wherein a change in the real point of view causes a corresponding change in the virtual point of view to a new virtual point of view and a corresponding change in rendering the virtual reality scene comprising the at least one second virtual element, wherein the virtual scene simulates the real scene from a new notional real point of view corresponding to the new virtual point of view such that the at least one second virtual element remains at the position in the virtual space as if at the position in the real scene.

According to various, but not necessarily all, embodiments there is provided an apparatus comprising means for:
obtaining real-time information defining a real point of view of a user in a real space;
converting the real point of view of the user to a virtual point of view in a virtual space by applying an offset to the real point of view, wherein the offset represents an offset between the real space and the virtual space;
controlling rendering of content to provide a mediated reality scene to a user, wherein the mediated reality scene and the rendered content depends upon the virtual point of view in the virtual space, wherein the rendered content comprises at least one virtual element rendered at a defined position in the virtual space;
controlling rendering of content to provide an augmented reality scene as the mediated reality scene that depends upon the virtual point of view, comprising:
   setting the offset to zero;
   not rendering content for see-through portions of the augmented reality scene to a real scene,
   rendering at least one first virtual element rendered as if at a position in the virtual space,
   wherein a change in the real point of view causes:
      a change in the real scene,
      a change in the virtual point of view with a corresponding change in rendering the at least one first virtual element such that it remains as if at the position in
      the virtual space;
controlling rendering of content to provide a virtual reality scene as the mediated reality scene that depends upon the virtual point of view comprising:
   setting the offset to a non-zero value,
   rendering content to replace the real scene in the virtual reality scene wherein the virtual scene simulates the real scene from a notional real point of view corresponding to the virtual point of view,
   rendering at least one second virtual element in the virtual scene at a position in the virtual space,
   wherein a change in the real point of view causes:
      a change in the virtual point of view to a new virtual point of view and a corresponding change in rendering the virtual reality scene comprising the at least one second virtual element, wherein the virtual scene simulates the real scene from a new notional real point of view corresponding to the new virtual point of view such that the at least one second virtual element remains at the position in the virtual space as if at the position in the real scene.

According to various, but not necessarily all, embodiments there is provided examples as claimed in the appended claims.

### BRIEF DESCRIPTION

Some examples will now be described with reference to the accompanying drawings in which:
FIGs 1A, 1B, 1C, 1D and FIGs 2A, 2B, 2C, 2D demonstrate augmented reality;
FIGs 3A, 3B, 3C and FIGs 4A, 4B, 4C demonstrate virtual reality;
FIG 5 illustrates an offset between a real point of view and a virtual point of view;
FIGs 6A, 7A, 8A and FIGs 6B, 7B, 8B demonstrate augmented reality and FIGs 6C, 7C, 8C demonstrate using virtual reality to simulate augmented reality;
FIG 9 illustrates an example of an apparatus for providing augmented reality and for using virtual reality to simulate augmented reality;
FIG 10 illustrates transitions between a mode for augmented reality and a mode for simulating augmented reality using virtual reality;
FIG 11 illustrates an example of a method for switching modes;
FIG 12 illustrates an example in which a user can select a teleport option;
FIG 13A and 13B illustrate an example in which a partially-real virtual reality scene is created;
FIG 14 illustrates an example of a controller;
FIG 15 illustrates an example of a computer program.

### DEFINITIONS

"*real space*" (or "physical space") refers to a real environment, which may be three dimensional.
"*real scene*" refers to a representation of the *real space* from a particular *point of view* (position) within the real space.
"*real point of view*" is a point of view within a real space. It may be defined using a real *location* and/or a real *orientation.*
"*artificial environment*" may be something that has been recorded or generated.
"*virtual space*" refers to fully or partially *artificial environment* that may be viewed, which may be three dimensional.
"*virtual scene*" refers to a representation of the *virtual space* viewed from a particular *point of view* (position) within the *virtual visual space.*
"*virtual element*" is a visible element or object within a *virtual scene.*
"*Virtual point of view*" is a point of view within a virtual space. It may be defined using a *virtual location* and/or a *virtual orientation.*
"*mediated reality*" in this document refers to a user experiencing, for example visually, a fully or partially artificial environment (a *virtual space)* as a *virtual scene* at least partially rendered by an apparatus to a *user.* The *virtual scene* is determined by a *point of view* within the *virtual space. Displaying* the *virtual scene* means providing a virtual visual scene in a form that can be perceived by the *user.*
"*augmented reality*" in this document refers to a form of *mediated reality* in which a *user* experiences a partially artificial environment (an augmented reality *space*) as an augmented reality scene. The augmented reality scene comprises a *real scene* of a physical real environment (*real space*) supplemented by a virtual scene, comprising one or more virtual elements (visual and/or audio), rendered by an apparatus to a user. The term augmented reality implies a mixed reality or hybrid reality and does not necessarily imply the degree of virtuality (vs reality) or the degree of mediality;
"*virtual reality*" in this document refers to a form of *mediated reality* in which a user experiences a fully artificial environment (a *virtual visual space*) as a *virtual scene* rendered by an *apparatus* to a user;
"*virtual content*" is content, additional to *real content* from a real scene, if any, that enables *mediated reality* by, for example, providing one or more artificial *virtual objects.*
"*mediated reality content*" is virtual content which enables *a user* to experience, for example visually, a fully or partially artificial environment (a *virtual space)* as a *virtual scene. Mediated reality content* could include interactive content such as a video game or non-interactive content such as motion video.
"*augmented reality content*" is a form of mediated reality content which enables a *user* to experience, for example visually, a partially artificial environment (a *virtual space*) as a *virtual scene. Augmented reality content* could include interactive content such as a video game or non-interactive content such as motion video.
"*virtual reality content*" is a form of mediated reality content which enables a user to experience, for example visually, a fully artificial environment (a *virtual space)* as a *virtual scene. Virtual reality content* could include interactive content such as a video game or non-interactive content such as motion video.
"*perspective-mediated*" as applied to *mediated reality, augmented reality or virtual reality* means that *user* actions determine the *point of view* within the virtual space, changing the *virtual scene*;
"*first person perspective-mediated*" as applied to *mediated reality, augmented reality or virtual reality* means *perspective mediated* with the additional constraint that the *user's* real *point of* view determines the *point of view* (virtual point of view) within the *virtual space of a virtual user.* The mediated reality described in this application below is *first person perspective-mediated.* "*user interactive*" as applied to *mediated reality, augmented reality or virtual reality means* that *user* actions at least partially determine what happens within the *virtual space*;
"*rendering*" means providing in a form that is perceived by the *user and includes displaying;* "*displaying*" means providing in a form that is perceived visually (viewed) by the *user.*
"*virtual user*" defines the *point of view* in *virtual space* used to generate a *perspective-mediated sound scene and*/*or visual scene.* A virtual user may be a notional listener and/or a notional viewer.
*Three degrees of freedom (3DoF)* describes *mediated reality* where the *virtual position* is determined by orientation only (e.g. the three degrees of three-dimensional orientation). In relation to *first person perspective-mediated reality,* only the *user's* orientation determines the *virtual position.*
*Six degrees of freedom (6DoF)* describes mediated reality where the *virtual position* is determined by both orientation (e.g. the three degrees of three-dimensional orientation) and location (e.g. the three degrees of three-dimensional location). In relation to *first person perspective-mediated reality,* both the *user's* orientation and the *user's* location in the *real space* determine the *virtual position.*
*Three degrees of freedom plus (3DoF+)* is a constrained form of 6DoF. The changes in location are small, for example, of a size that can be achieved by a user leaning from the waist in a particular direction.

### DETAILED DESCRIPTION

In the following description an instance of a class (member of a set) can be referenced using a reference number with or without a particular subscript index. The class (or set) can be referenced using a reference number without a subscript index.

The following description relates to mediated reality for example augmented reality or virtual reality. The examples are first-person perspective augmented reality and first-person perspective virtual reality.

### Augmented Reality

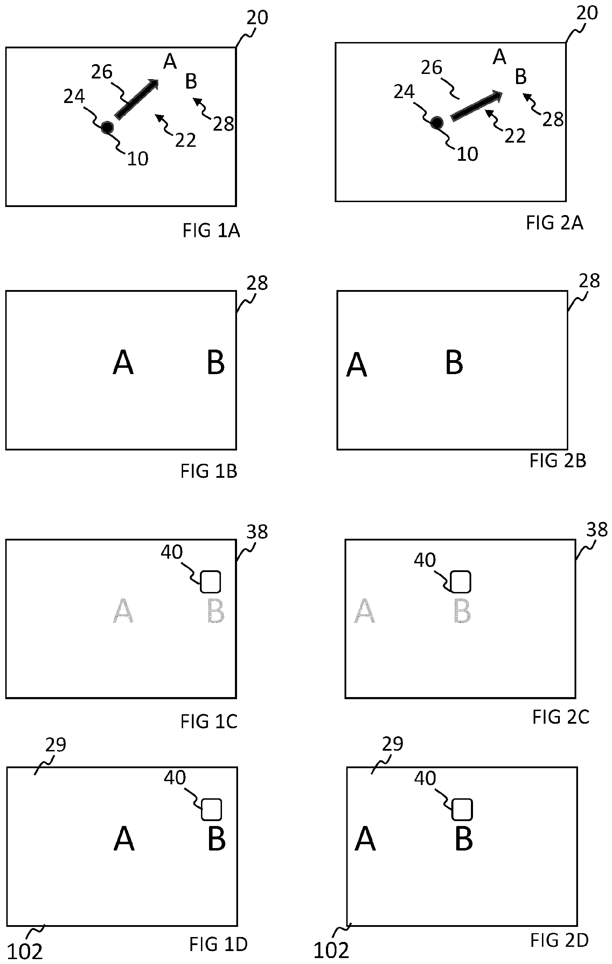

Figs 1A, 1B, 1C, 1D and 2A, 2B, 2C, 2D illustrate augmented reality. There is a change in a real point of view 22 of a user 10 between a first time (Figs 1A, 1B, 1C, 1D) and a second time (FIGs 2A, 2B, 2C, 2D).

FIG 1A and 2A illustrate an example of a real space 20 at different times. A user 10, who is present in the real space 20, has a real point of view 22 defined by a location 24 and/or orientation 26 of the user 10. The real point of view 22, in combination with a field of view (not illustrated), defines a real scene 28 that can be seen by the user 10 when they adopt that real point of view 22. FIG 1A illustrates the real space 20 at a first time and FIG 2A illustrates the real space 20 at a second time.

As illustrated in FIGs 1B, 1C, 1D and 2B, 2C, 2D, augmented reality produces an augmented reality scene 29 by combining a real scene 28 and a virtual scene 38.

FIG 1A illustrates an example of the real space 20 at a first time, FIG 1B illustrates the corresponding real scene 28 at the first time, FIG 1C illustrates the corresponding (partial) virtual scene 38 defined by virtual content 40 at the first time and FIG 1D illustrates the augmented reality scene 29 at the first time.

FIG 2A illustrates an example of the real space 20 at a second different time, FIG 2B illustrates the corresponding real scene 28 at the second time, FIG 2C illustrates the corresponding (partial) virtual scene 38 defined by virtual content 40 at the second time and FIG 2D illustrates the augmented reality scene 29 at the second time.

The real space 20 comprises real objects 'A' and 'B'. The objects are included as real objects in the real space 20 of FIGs 1A, 2A, are included in the real scene 28 of FIG1B at the first time and included in the real scene 28 of FIG 2B at the second time. As the point of view 22 changes orientation between the first time and the second time, the positions of the real objects 'A' and 'B' within the real scene 20 move between FIG 1B and FIG 2B.

As illustrated in FIGs 1C and 2C, the virtual scene 38 is defined by virtual content 40, in this case augmented reality content that defines a partially artificial environment as a partial virtual scene. That is a virtual scene 38 that occupies a part of the field of view. The corresponding positions of the real objects 'A' and 'B', in the virtual scene 38, relative to the virtual content 40, are illustrated using ghosting at the first time in FIG 1C and at the second time in FIG 2C.

As illustrated in FIGs 1D and 2D, augmented reality produces the augmented reality scene 29 by combining a real scene 28 and a corresponding virtual scene 38.

The virtual content 40 is rendered on a display 102 to overlay (and in some circumstances obscure) a portion (but not all) of the real scene 28. The rendered virtual scene has see-through gaps to the real scene 28.

The display 102 is a see-through display that allows the user 10 to see-through the display 102 to the real scene 28 while simultaneously displaying, in the foreground, the virtual content 40.

The augmented reality scene 29 therefore comprises a real scene 28 supplemented by a virtual scene 38, comprising one or more virtual elements (visual and/or audio), rendered by an apparatus 100 to a user 10. In at least some examples, one or more virtual elements are user interactive.

In these examples, the real point of view 22 of the user 10 changes between the first time and the second time as illustrated in FIGs 1A and 2A. The user's real point of view 22 determines the real point of view 22 within the real space 20 of a real user 10 and this defines the real scene 28. The user's real point of view 22 also determines the virtual point of view within a virtual space of a virtual user (not illustrated) and this defines the (partial) virtual scene 38. There is no offset between the real point of view 22 and the virtual point of view. The virtual point of view is the real point of view 22. The real user 10 and the virtual user have the equivalent point of view- equivalent location and equivalent orientation.

It is not possible to have a discontinuous change (teleport) in the real point of view 22 (location and/or orientation) of the real user 10 and it is therefore not possible to have a discontinuous change (teleport) in the virtual point of view (virtual location and/or virtual orientation) of the virtual user.

### Virtual Reality

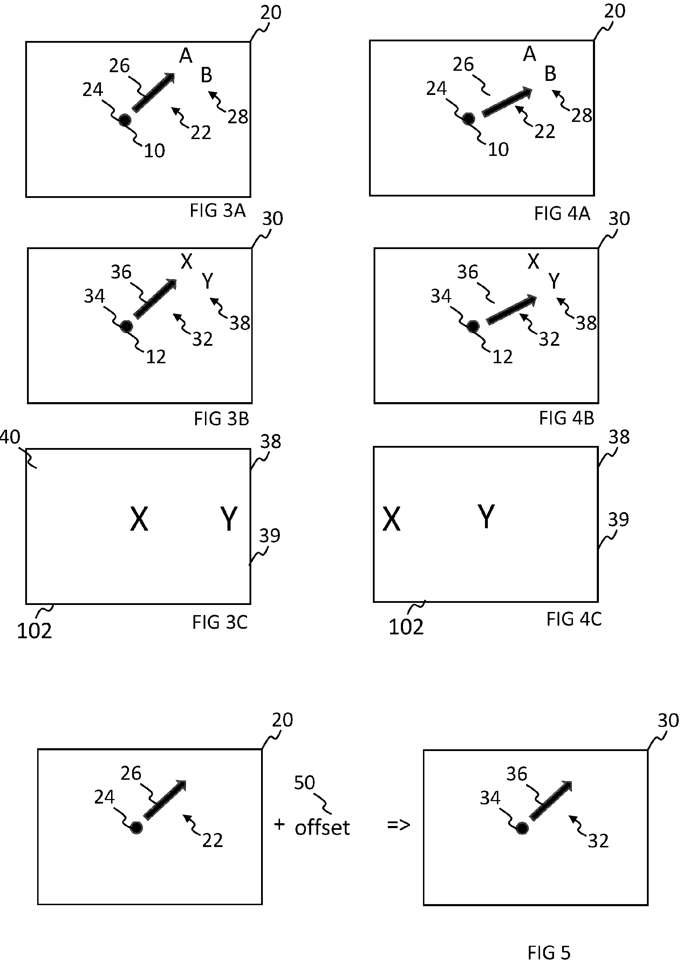

Figs 3A, 3B, 3C and 4A, 4B, 4C illustrate virtual reality. There is a change in a real point of view 22 of a user 10 between a first time (Figs 3A, 3B, 3C) and a second time (FIGs 4A, 4B, 4C)

FIG 3A and 4A illustrate an example of a real space 20 at different times. A user 10, who is present in the real space 20, has a real point of view 22 defined by a location 24 and/or orientation 26 of the user 10. The real point of view 22, in combination with a field of view (not illustrated), defines a real scene 28 that can be seen by the user 10 when they adopt that real point of view 22. FIG 3A illustrates the real space 20 at a first time and FIG 4A illustrates the real space 20 at a second time.

FIG 3B and 4B illustrate an example of a virtual space 30 at different times. FIG 3B illustrates the virtual space 30 at the first time and FIG 4B illustrates the virtual space 30 at the second time. A virtual user 12, present in the virtual space 30, has a virtual point of view 32 defined by a virtual location 34 and/or a virtual orientation 36 of the virtual user 12. The virtual point of view 32, in combination with a field of view (not illustrated), defines a virtual scene 38 that can be rendered to a user 10.

The virtual scene 38 associated with a first virtual point of view 32 can be seen by the user 10 when they adopt a real point of view 22 that causes the virtual point of view 32 to become that first point of view.

As illustrated in FIGs 3C and 4C, virtual reality produces a virtual reality scene 39 comprising the virtual scene 38. The virtual scene 38 is defined by virtual content 40, in this case virtual reality content that fully defines a fully artificial environment as a virtual scene 38. That is a virtual scene 38 occupies a whole of the field of view.

The virtual content 40 is rendered on a display 102 and does not comprise see-through gaps to the real scene 28.

The virtual scene can comprise virtual elements (visual and/or audio). In at least some examples, one or more virtual elements are user interactive.

FIG 3A illustrates an example of the real space 20 at the first time, FIG 3B illustrates the corresponding virtual space 30 at the first time, FIG 3C illustrates the corresponding (fully) virtual scene 38 defined by virtual content 40 at the first time which defines the virtual reality scene 39.

FIG 4A illustrates an example of the real space 20 at the second time, FIG 4B illustrates the corresponding virtual space 30 at the second time, FIG 4C illustrates the corresponding (fully) virtual scene 38 defined by virtual content 40 at the second time which defines the virtual reality scene 39.

In these examples, the real point of view 22 of the user 10 changes between the first time and the second time as illustrated in FIGs 3A and 4A. The user's real point of view 22 determines the virtual point of view 32 within a virtual space 30 of a virtual user 12 (FIGs 3B and 4B). The virtual point of view 32 defines the (fully) virtual scene 38.

There can be an arbitrary offset between the real point of view 22 and the virtual point of view 32. The real user 10 and the virtual user 12 do not have to have the equivalent point of view-equivalent location and equivalent orientation.

It is possible to have a discontinuous change (teleport) in the virtual point of view 32 (virtual location and/or virtual orientation) of the virtual user 12 by making a discontinuous change in the offset between the real point of view 22 and the virtual point of view 32.

As illustrated in FIG 5 the offset 50 is the difference between real point of view 22 and the virtual point of view 32. In the example of FIG 5, the offset is the change in point of view that converts the real point of view 22 to the virtual point of view 32. It could, however, alternatively be defined as the change in point of view that converts the virtual point of view 32 to the real point of view 22. It is a matter of convention.

### Teleport

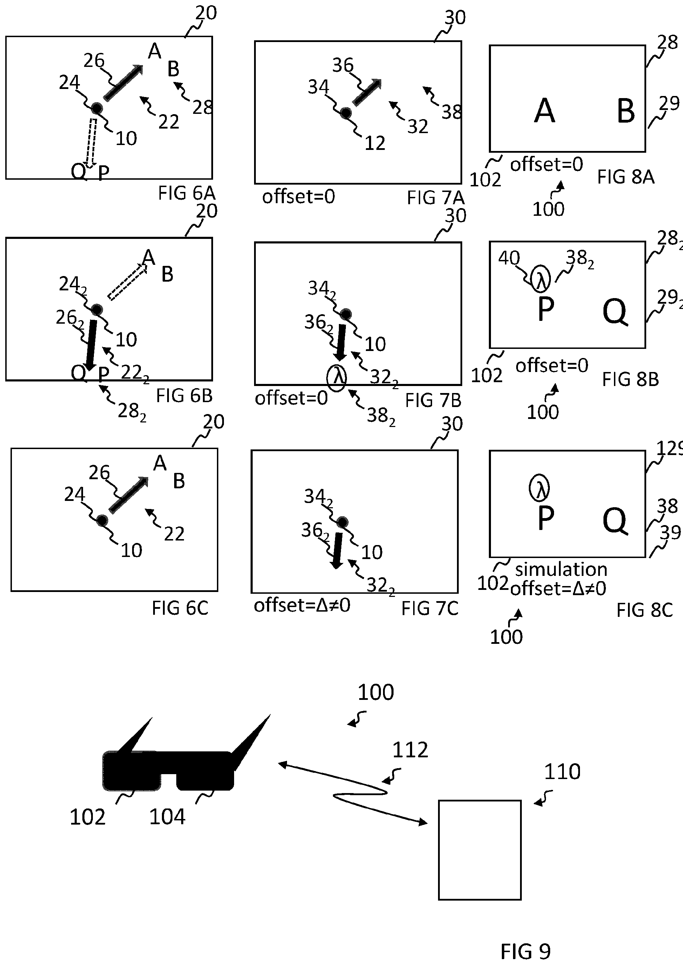

The teleport facility available in virtual reality is not available in augmented reality. FIGs 6A, 6B, 6C, 7A, 7B, 7C, 8A, 8B, 8C illustrate how a teleport facility can be simulated for a user 10 experiencing augmented reality. The augmented reality and the simulated augmented reality are first-person perspective mediated.

FIGs 6A, 6B, 6C illustrate a real point of view 22 in a real space 20. FIGs 7A, 7B, 7C illustrate corresponding virtual points of view 32 in a virtual space. FIGs 8A, 8B, 8C illustrate corresponding mediated reality scenes. FIGs 8A and 8B illustrate augmented reality scenes 29, 29₂. FIG 8C illustrates a virtual reality scene 39 that simulates an augmented reality scene 29₂ as illustrated in FIG 8B. The virtual reality scene 39 is defined by (and varies with) the virtual point of view 32₂ (FIG 7C) which has a non-zero offset from the real point of view 22 (FIG 6C).

FIG 6A illustrates an example of a real space 20. A user 10, who is present in the real space 20, has a real point of view 22 defined by a location 24 and/or orientation 26 of the user 10. The real point of view 22, in combination with a field of view (not illustrated), defines a real scene 28 that can be seen by the user 10 when they adopt that real point of view 22.

FIG 7A illustrates that a virtual user 12, present in the virtual space 30, has a virtual point of view 32 defined by a virtual location 34 and/or a virtual orientation 36 of the virtual user 12. The virtual point of view 32, in combination with a field of view (not illustrated), defines the virtual scene 38.

As illustrated in FIG 8A, augmented reality produces an augmented reality scene 29 by combining the real scene 28 and the (partial) virtual scene 38. In this example, the virtual scene 38 is empty and the augmented reality scene 29 is the real scene 28.

The virtual point of view 32 has a zero offset from the real point of view 22 and the real point of view 22 and the virtual point of view 32 move together.

FIG 6B illustrates an example of the real space 20 illustrated in FIG 6A. A user 10, who is present in the real space 20, has a real point of view 22₂ defined by a location 24₂ and/or orientation 26₂ of the user 10. The real point of view 22₂, in combination with the field of view (not illustrated), defines a real scene 28₂ that can be seen by the user 10 when they adopt that real point of view 22₂.

FIG 7B illustrates that a virtual user 12, present in the virtual space 30, has a virtual point of view 32₂ defined by a virtual location 34₂ and/or a virtual orientation 36₂ of the virtual user 12. The virtual point of view 32₂, in combination with a field of view (not illustrated), defines the virtual scene 38₂.

As illustrated in FIG 8B, augmented reality produces an augmented reality scene 29₂ by combining a real scene 28₂ and a (partial) virtual scene 38₂. In this example, the virtual scene 38₂ comprises virtual content 40 and the augmented reality scene 29₂ is the real scene 28₂ augmented by the virtual content 40 of the virtual scene 38₂.

The virtual point of view 32₂ has a zero offset from the real point of view 22₂ and the real point of view 22₂ and the virtual point of view 32₂ move together.

The virtual content 40 defining the virtual scene 38, 38₂ is rendered on a display 102 of an apparatus 100 to overlay (and in some circumstances obscure) a portion (but not all) of the real scene 28, 28₂. The rendered virtual scene 38, 38₂ has see-through gaps to the real scene 28₂.

The display 102 is a see-through display that allows the user 10 to see-through the display 102 to the real scene 28, 28₂ while simultaneously displaying, in the foreground, the virtual content 40 (if any).

The augmented reality scene 29 therefore comprises a real scene 28 supplemented by a virtual scene 38, comprising one or more virtual elements (visual and/or audio), rendered by an apparatus 100 to a user 10. In at least some examples, one or more virtual elements are user interactive.

In these examples, the virtual content 40 defines a virtual element (λ) that is displayed in association with a real element (P). The virtual element (λ) has a fixed location relative to the real element (P). The virtual element (λ) has a fixed location in the virtual space 30 which has a fixed relationship to the real space 20.

The user's real point of view 22 defines the real scene 28. The user's real point of view 22 also determines the virtual point of view 32 within the virtual space 30 of the virtual user 12 and this defines the (partial) virtual scene 38. There is no offset between the real point of view 22 and the virtual point of view 32. The virtual point of view 32 is the real point of view 22. The real user 10 and the virtual user 12 maintain the equivalent point of view- equivalent location and equivalent orientation.

FIGs 6C, 7C, 8C illustrate how it is possible to simulate a discontinuous change (teleport) in the real point of view 22 (location and/or orientation) of the real user 10 to a target point of view by switching from augmented reality to virtual reality.

FIG 6C (same as 6A) illustrates the user's real point of view 22 before teleport. FIG 6B illustrates the target real point view 22₂ to be achieved after teleport.

FIG 7B illustrates the virtual point of view 32₂ corresponding to the target real point of view 22₂. and FIG 8B illustrate the corresponding target augmented reality scene 29₂.

FIG 7C illustrates teleportation. The new virtual point of view 32₂ now has a non-zero offset from the current real point of view 22. The virtual point of view 32₂ now varies with a (non-varying) non-zero offset when the real point of view 22 varies.

FIG 8C illustrate a virtual reality scene 39 determined by the new virtual point of view 32₂ (FIG 7C). The virtual reality scene 39 simulates the target augmented reality scene 29₂ illustrated in FIG 8B and the virtual reality scene 39 is therefore a simulated augmented reality scene 129.

The virtual reality scene 39 simulates the target augmented reality scene 29₂. It simulates the target real scene 28₂ defined by the target real point of view 22₂ and also simulates the (partial) virtual scene 38₂ of the target augmented reality scene 29₂ defined by virtual content 40.

The switch from the augmented reality scene 29 (FIG 6A, 7A, 8A) to the simulated augmented reality scene 129 (FIG 6C, 7C, 8C) is achieved by changing an offset between the real point of view 22 and the virtual point of view 32 from a zero value (FIG 6A, 7A, 8A) to a non-zero value (FIG 8A, 8B, 8C).

The new offset virtual point of view 32₂ is then used as a notional real point of view 22 to determine which augmented reality scene 29 should be simulated. The offset between the new offset virtual point of view 32₂ and the notional real point of view is zero. The new notional real point of view defines a simulated real scene and the augmenting virtual content, of the virtual scene, if any.

Fig 9 illustrates an example of an apparatus 100 suitable for controlling simulation of a discontinuous change (teleport) in the real point of view 22 of the real user 10 to a target as described previously. The apparatus 100 can be a display apparatus 104 comprising the display 102 or a different apparatus 110 in communication with 112 the display apparatus 104.

The apparatus 100 can in some examples be a head mounted device (HMD) that is worn by a user 10 and provides the display 102 in front of the user's eyes. The apparatus 100 can in some examples be a head up display (HUD) device that is positioned remotely from the user 10 (not worn). The HUD 102 projects light to the user's eyes.

The apparatus 100 comprises means for:
in a first mode, controlling rendering of content to provide an augmented reality scene 29 that continuously varies with a point of view that has a zero offset from a real point of view 22 of a user 10; and
in a second mode 122, controlling rendering of content to provide a virtual reality scene 39 that is a simulated augmented reality scene 129 that continuously varies with a point of view that has a non-zero offset from the real point of view 22 of the user 10, wherein the simulated augmented reality scene 129 is defined by the point of view that has the non-zero offset from the real point of view 22.

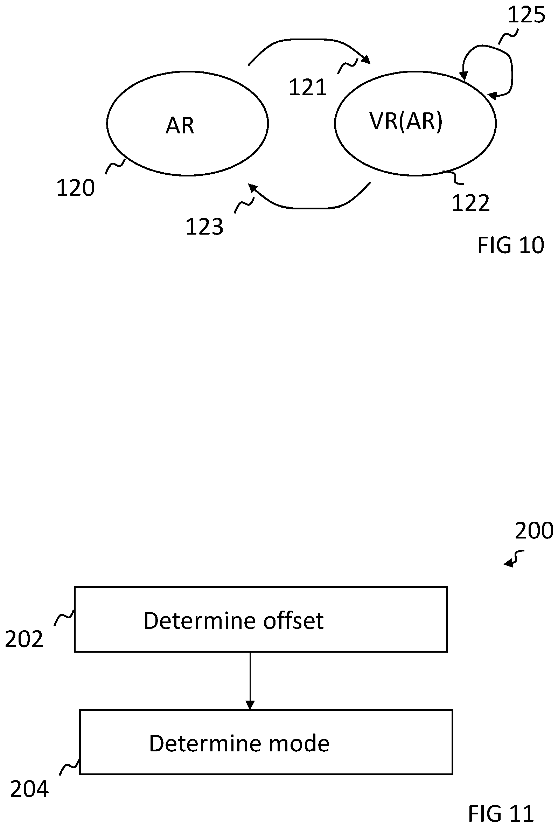

Examples of the first mode 120 and the second mode 122 and the transitions 121, 123 between modes 120, 122 is illustrated in FIG 10.

In the first mode 120, the augmented reality scene 29 continuously varies with the real point of view 22 of a user 10. The augmented reality scene 29 comprises the real scene 28 and the virtual scene 38 and together they vary with the real point of view 22. The real scene 28 is defined by the real point of view 22 and the virtual scene 38 is defined by the virtual point of view 32 that has a zero offset from the real point of view 22.

In at least some examples, the rendering of content to provide the augmented reality scene 29 that continuously varies with the real point of view 22 of a user 10 comprises:
not rendering content for see-through portions of the augmented reality scene 29 to a real scene 28 and rendering at least one first virtual element (virtual content 40) as if at a position in the real scene 28. A change in the real point of view 22 causes a corresponding change in rendering the at least one first virtual element (virtual content 40) such that it remains as if at a constant position in the real scene 28.

In the second mode 122, the virtual reality scene 39 (and augmented reality scene 29) continuously varies with the virtual point of view 32 which has a non-zero offset from the real point of view 22. The augmented reality scene 29 that is simulated corresponds to that rendered for a notional real point of view 22 that is equivalent to the virtual point of view 32 (the non-zero offset real point of view).

In at least some examples, rendering of content to provide a virtual reality scene 39 that is a simulated augmented reality scene 129 that continuously varies with the real point of view 22 of the user 10, comprises: rendering content to provide a virtual reality scene 39 that continuously varies with a virtual point of view 32 that has a non-zero offset from the real point of view 22 of a user 10 and rendering at least one second virtual element (λ) at a position in the virtual scene 38 as if at a position in the real scene 28. The virtual reality scene 39 simulates a real scene 28 from a notional real point of view 22 corresponding to the virtual point of view 32. A change in the real point of view 22 causes a corresponding change in the virtual point of view 32 to a new virtual point of view 32₂ and a corresponding change in rendering the virtual reality scene 39 comprising the at least one second virtual element. The virtual scene 38 simulates the real scene 28 from a new notional real point of view corresponding to the new virtual point of view 32₂ such that the at least one second virtual element (λ) remains at the position in the virtual scene 38 as if at the position in the real scene 28.

In at least some examples, virtual elements that are tagged to objects in the real scene 28 before teleporting do not teleport and are not present in the simulated augmented reality scene 129 unless those objects are also in the simulated augmented reality scene 129. Virtual elements that are not tagged to objects in the real scene 28 before teleporting can teleport and can be present in the simulated augmented reality scene 129.

The apparatus 100 can be configured to use a model of the real space 20 to simulate an augmented reality scene 29. The model of the real space 20 can, for example, be based on data acquired by the apparatus 100, for example via one or more cameras or lidars.

The simulated augmented reality scene 129 is based on the model of the real space 20. The simulated real scene of the simulates augmented reality scene 29 is the scene from modelled real space when viewed from the notional point of view that has the non-zero offset from the real point of view 22.

As illustrated in FIG 10, a transition 121 (a teleport) can occur from the first mode (augmented reality) 120 to the second mode (virtual reality simulating augmented reality) 122. This teleport comprises changing the offset between the real point of view 22 and the virtual point of view 32 from a zero value to a non-zero value and simulating the real scene 28 that has a notional real point of view that corresponds (with zero offset) to the new offset virtual point of view 32. The transition 121 can occur in response to a user command

In the second mode 122, a teleport (transition 125) can occur from within the second mode 122 (virtual reality simulating augmented reality). This teleport comprises changing the non-zero value of the offset between the real point of view 22 and the virtual point of view 32 from a first non-zero value to a second non-zero value. The new simulated augmented reality scene 31 has a simulated real scene determined by the new notional real point of view. The new notional real point of view corresponds (with zero offset) to the new offset virtual point of view 32. The new offset virtual point of view 32 is offset by the second non-zero value from the current real point of view 22. The transition 125 can occur in response to a user command

In some example, the non-zero offset or the change in the non-zero offset is constrained to enable traversal of a continuous real space 20 rather than jumping between disjoint real spaces 20. For example, the user 10 can teleport within a room or a series of interconnected rooms but not between unconnected rooms.

In some but not necessarily all examples the apparatus 100 can decide whether or not to transition 121, 123 between the first mode 120 and the second mode 122. An example of a method 200 is illustrated in FIG 11.

In this example, the apparatus 100 is configured to determine, at block 202, an offset between a target point of view and the real point of view 22 of the user 10. The apparatus 100 is configured to determine, at block 204, whether to operate in the first mode 120 or the second mode 122 in dependence upon the determined offset.

In some but not necessarily all examples, the apparatus 100 determines to transition 121 to operating in the second mode 122 when the determined offset is greater than a first threshold value. In some but not necessarily all examples, the apparatus 100 determines to transition 123 to operating in the first mode 120 when the determined offset is less than a second threshold value.

In some but not necessarily all examples, the apparatus 100 determines to keep operating in the second mode 122 when the determined offset is greater than a threshold value. In some but not necessarily all examples, the apparatus 100 determines to keep operating in the first mode 120 when the determined offset is less than a threshold value.

The apparatus 100 can be configured to generate a virtual point of view 32. This can, for example, comprise:
obtaining real-time information defining a real point of view 22 of a user 10 in a real space 20; converting the real point of view 22 of the user 10 to a virtual point of view 32 in a virtual space 30 by optionally applying an offset to the real point of view 22, wherein the offset represents an offset between the real space 20 and the virtual space 30;
wherein the offset is zero value (not applied) when rendering the augmented reality scene 29 (first mode 120) and is a non-zero value when rendering a virtual reality scene 39 (second mode 122).

In some but not necessarily all examples, the apparatus 100 is configured so that, in the second mode 122, it monitors the offset between the point of view that determines the simulated augmented reality scene 129 and the real point of view 22; and determines whether to switch from the second mode 122 to the first mode 120 in dependence upon the monitored offset. In some but not necessarily all examples, the apparatus 100 is configured to transition 123 to operate in the first mode 120 when the monitored offset becomes zero. In some examples, the apparatus 100 is configured to set the monitored offset to zero, when the monitored offset becomes less than a threshold value.

In a normal augmented reality scene 29, the majority of the augmented reality scene 29 comprises see-through areas to the real scene 28 with a minority of the augmented reality scene 29 comprising virtual content 40 in the partial virtual scene 38. The real scene 28 is determined by the real point of view 22 of the user 10 and the virtual content 40 is determined by the virtual point of view 32 of the virtual user 12 which has a zero offset from the real point of view 22.

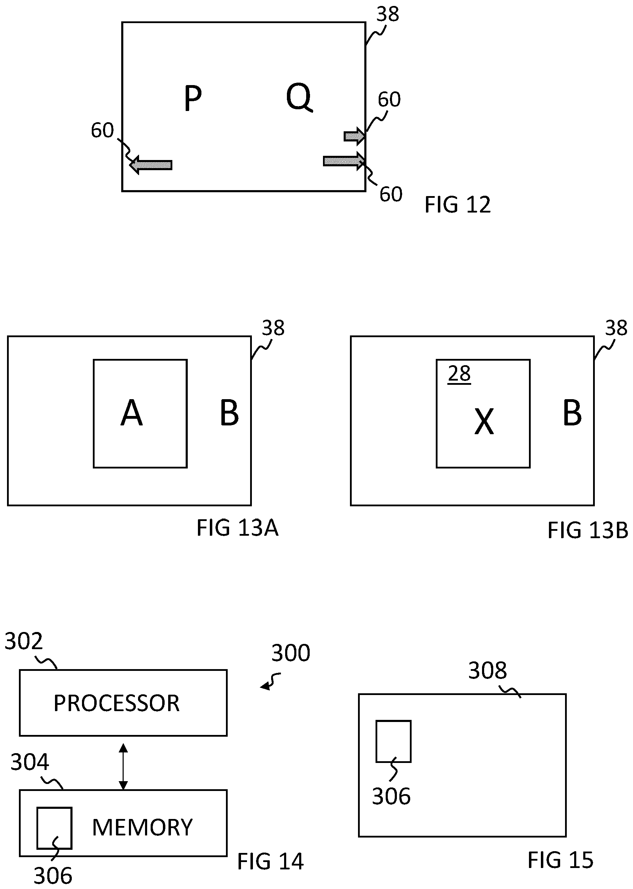

In an adaptation to a virtual reality scene 39, which is normally fully virtual, a partially-real virtual reality scene is created. The partially-real virtual reality scene 39 (FIG 13B) simulates an augmented reality scene 29 (FIG 13A) using some parts of a current real scene 28 but that current real scene 28 is not the real scene 28 associated with the simulated augmented reality scene 129. In this example, the current real scene 28 and the real scene 28 that is simulated in the simulated augmented reality scene 129 share similar content (A & X). The live version of the similar content X from the current real scene 28 is used to simulate the similar content A of the simulated augmented reality scene 129. A portion of the virtual content 40 defining the virtual scene38/ virtual reality scene 39 is therefore made see-through so that it provides a window though to the live version of the similar content X from the current real scene 28.

Typically, in a partially-real virtual reality scene 39 a minority of the simulated augmented reality scene 129 comprises see-through areas to the current real scene 28 with a majority of the augmented reality scene 29 comprises virtual content 40 in the partial virtual scene 38. The current real scene 28 is determined by the current real point of view 22 of the user 10 and the virtual content 40 is determined by the virtual point of view 32 of the virtual user 12 which has a non-zero offset from the real point of view 22.

In the second mode 122, the apparatus 100 can switch from rendering virtual reality scene 39 that comprises a virtual scene 38 that fully replicates a simulated real scene to a partially virtual scene that comprises a virtual scene 38 that partially replicates a simulated real scene and which has one or more see-through portions to the current live real scene 28. The switch can occur automatically or semi-automatically when the apparatus 100 detects that a current real scene 28 and the real scene 28 that is being simulated in the simulated augmented reality scene 129 share similar content. For example, share a window, share a view of the sea, share a door opening etc

Content creator rules may drive the system behavior. For example, the content itself can identify content, for example objects, that are to be analyzed for similarity and can identify how similarity is determined.

In some examples, for example as illustrated in FIG 12, the apparatus 100 is configured to indicate, for example using user-interactive elements 60, when it is in the second mode 122, alternative points of view that can be adopted by the user 10 to transition (teleport) 123 from the second mode 122 to the first mode 120 or to transition (teleport) 125 within the second mode 122.

In the example illustrated, the virtual scene 38 comprises user-interactive elements 60 that represent different teleport options. User-selection of a user-interactive element 60 by pointing or grabbing or touching causes a teleport indicated by the user-interactive element 60 to occur. In the example illustrated, a short arrow pointing to the right indicates a moderate change in offset, for example a change in location offset so that it is moderately further to the right, for a teleport. A longer arrow pointing to the right indicates a larger change in offset, for example change in location offset so that it is significantly further to the right, for a teleport. A short arrow pointing to the left indicates a moderate change in offset, for example change in location offset so that it is moderately further to the left, for a teleport. It will be appreciated that the examples illustrated are some of many different possible examples. Any suitable indication can be used to indicate any suitable teleport 125.

In some examples, one of the user-interactive elements 60 can indicate a teleport to a simulation of an augmented reality scene 29 that corresponds with an augmented reality scene 29 defined by the current real point of view 22 of the user 10 or by a point of view within a threshold value of the current real point of view 22 of the user 10. That is, user-interactive element 60 indicates an option to switch from the second mode 122 to the first mode 120.

In some examples it may be desirable to use transition effects when performing any of the transitions 121, 123, 125.

In some examples, the apparatus 100 is configured to cause rendering of a virtual element that was rendered in the augmented reality scene 29 before a transition from the first mode 120 to the second mode 122 in the simulated augmented reality scene 129. In some but not necessarily all examples, the virtual element has an effective position in real space 20 that is maintained in the augmented reality scene 29 and the simulated augmented reality scene 129

In some examples, the apparatus 100 is configured to cause a transition 121, 123 between the first mode 120 and the second mode 122 by causing a transition between an augmented reality scene 29 defined by the real point of view 22 and a simulated augmented reality scene 129 defined by the point of view that has a non-zero offset from the real point of view 22 through a series of simulated augmented reality scenes 129 defined by a series of points of view. The series of points of view have increasing, intermediate non-zero offsets from the real point of view 22 from a transition to the simulated augmented reality scene 129. The series of points of view have decreasing, intermediate non-zero offsets from the real point of view 22 from a transition to the simulated augmented reality scene 129. The series of points of view can monotonically increase/decrease.

In some examples, the apparatus 100 is configured to cause a transition 121, 123 between the first mode 120 and the second mode 122 by causing a transition between an augmented reality scene 29 defined by the real point of view 22 and
a simulated augmented reality scene 129 defined by the point of view that has a non-zero offset from the real point of view 22, where a consistent transition effect is applied to the augmented reality scene 29 and the simulated augmented reality scene 129. The consistent transition effect could for example be a blur or similar.

### Apparatus

A controller 300 for controlling the methods described above can transition 121 be the apparatus 100. Alternatively, a controller 300 for controlling the methods described above can be comprised in the apparatus. Such as apparatus 100 can be a display apparatus 104 comprising the display 102 or a different apparatus 110 in communication with 112 the display apparatus 104.

Fig 14 illustrates an example of a controller 300. Implementation of a controller 300 may be as controller circuitry. The controller 300 may be implemented in hardware alone, have certain aspects in software including firmware alone or can be a combination of hardware and software (including firmware).

As illustrated in Fig 14 the controller 300 may be implemented using instructions that enable hardware functionality, for example, by using executable instructions of a computer program 306 in a general-purpose or special-purpose processor 302 that may be stored on a computer readable storage medium (disk, memory etc) to be executed by such a processor 302.

The processor 302 is configured to read from and write to the memory 304. The processor 302 may also comprise an output interface via which data and/or commands are output by the processor 302 and an input interface via which data and/or commands are input to the processor 302.

The memory 304 stores a computer program 306 comprising computer program instructions (computer program code) that controls the operation of the apparatus 100 when loaded into the processor 302. The computer program instructions, of the computer program 306, provide the logic and routines that enables the apparatus to perform the methods illustrated in the Figs. The processor 302 by reading the memory 304 is able to load and execute the computer program 306.

The apparatus 100 therefore comprises:
at least one processor 302; and
at least one memory 304 including computer program code
the at least one memory 304 and the computer program code configured to, with the at least one processor 302, cause the apparatus 100 at least to perform:
   in a first mode 120, controlling rendering of content to provide an augmented reality scene 29 that continuously varies with a real point of view 22 of a user 10; and
   in a second mode 122, controlling rendering of content to provide a virtual reality scene 39 that is a simulated augmented reality scene 129 that continuously varies with the real point of view 22 of the user 10, wherein the simulated augmented reality scene 129 is defined by a point of view that has a non-zero offset from the real point of view 22.

As illustrated in Fig 15, the computer program 306 may arrive at the apparatus 100 via any suitable delivery mechanism 308. The delivery mechanism 308 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 306. The delivery mechanism may be a signal configured to reliably transfer the computer program 306. The apparatus 100 may propagate or transmit the computer program 306 as a computer data signal.

Computer program instructions for causing an apparatus to perform at least the following or for performing at least the following:
in a first mode 120, controlling rendering of content to provide an augmented reality scene 29 that continuously varies with a real point of view 22 of a user 10; and
in a second mode 122, controlling rendering of content to provide a virtual reality scene 39 that is a simulated augmented reality scene 129 that continuously varies with the real point of view 22 of the user 10, wherein the simulated augmented reality scene 129 is defined by a point of view that has a non-zero offset from the real point of view 22.

The computer program instructions may be comprised in a computer program, a non-transitory computer readable medium, a computer program product, a machine readable medium. In some but not necessarily all examples, the computer program instructions may be distributed over more than one computer program.

Although the memory 304 is illustrated as a single component/circuitry it may be implemented as one or more separate components/circuitry some or all of which may be integrated/removable and/or may provide permanent/semi-permanent/ dynamic/cached storage.

Although the processor 302 is illustrated as a single component/circuitry it may be implemented as one or more separate components/circuitry some or all of which may be integrated/removable. The processor 302 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs may represent steps in a method and/or sections of code in the computer program 306. The illustration of a particular order to the blocks does not necessarily imply that there is a required or preferred order for the blocks and the order and arrangement of the block may be varied. Furthermore, it may be possible for some blocks to be omitted.

In the examples described above, the mediated reality is first person perspective-mediated reality. It may or may not be user interactive. It may be 3DoF, 3DoF+ or 6DoF.

The location is a three-dimensional location and the orientation is a three-dimensional orientation.

In 3DoF mediated reality, an orientation 26 of the user 10 controls, in real time, a virtual orientation 36 of a virtual user 12. There is a correspondence between the orientation 26 and the virtual orientation 36 such that a change in the orientation 26 produces the same change in the virtual orientation 36. The virtual orientation 36 of the virtual user 12 in combination with a virtual field of view defines a virtual scene 38 within the virtual space 30. In 3DoF mediated reality, a change in the location of the user 10 does not change the virtual point of view 32, virtual location 34 or virtual orientation 36 of the virtual user 12.

In 3DoF+ and 6DoF mediated reality, the situation is as described for 3DoF and in addition it is possible to change the rendered virtual scene 38, in real time, by movement of a location 24 of the user 10. For example, there may be a mapping between the location 24 of the user 10 and the virtual location 34 of the virtual user 12. A change in the location 24 of the user 10 produces a, real-time, corresponding change in the virtual location 34 of the virtual user 12.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
in a first mode, controlling rendering of content to provide an augmented reality scene that continuously varies with a point of view that has a zero offset from a real point of view of a user; and
in a second mode, controlling rendering of content to provide a virtual reality scene that is a simulated augmented reality scene that continuously varies with a point of view that has a non-zero offset from the real point of view of the user, wherein the simulated augmented reality scene is defined by the point of view that has the non-zero offset from the real point of view.

2. An apparatus as claimed in claim 1, comprising means for:
determining an offset between a target point of view and the real point of view of the user; and determining whether to operate in the first mode or the second mode in dependence upon the determined offset.

3. An apparatus as claimed in claim 2, wherein determining whether to operate in the first mode or the second mode in dependence upon the determined offset comprises determining to operate in the second mode when the determined offset is greater than a threshold value.

4. An apparatus as claimed in any preceding claim, comprising means for, in second mode:
monitoring the offset between the point of view that determines the simulated augmented reality scene and the real point of view; and
determining whether to switch from the second mode to the first mode in dependence upon the monitored offset.

5. An apparatus as claimed in claim 4, wherein determining whether to switch from the second mode to the first mode in dependence upon the monitored offset comprises determining to switch to operate in the first mode when the monitored offset is zero.

6. An apparatus as claimed in claim 4 or 5, comprising means for setting the monitored offset to zero, when the monitored offset becomes less than a threshold value.

7. An apparatus as claimed in any preceding claim, comprising means for, in the second mode, indicating alternative points of view that can be adopted by the user to switch from the second mode to the first mode.

8. An apparatus as claimed in any preceding claim, comprising means for causing rendering of at least a virtual element that was rendered in the augmented reality scene before a transition from the first mode to the second mode in the simulated augmented reality scene.

9. An apparatus as claimed in any preceding claim, comprising means for causing a transition between the first mode and the second mode configured to cause a transition from an augmented reality scene defined by the real point of view to
a simulated augmented reality scene defined by the point of view that has a non-zero offset from the real point of view through a series of simulated augmented reality scenes defined by a series of points of view that have increasing, intermediate non-zero offsets from the real point of view and/or configured to cause a transition to an augmented reality scene defined by the real point of view from a simulated augmented reality scene defined by a point of view that has a non-zero offset from the real point of view through a series of simulated augmented reality scenes defined by a series of points of view that have decreasing, intermediate non-zero offsets from the real point of view.

10. An apparatus as claimed in any preceding claim, comprising means for causing a transition between the first mode and the second mode by causing a transition between an augmented reality scene defined by the real point of view and
a simulated augmented reality scene defined by the point of view that has a non-zero offset from the real point of view, wherein a consistent transition effect is applied to the augmented reality scene and the simulated augmented reality scene.

11. An apparatus as claimed in any preceding claim,
wherein controlling rendering of content to provide the augmented reality scene that continuously varies with a real point of view of a user comprises:
not rendering content for see-through portions of the augmented reality scene to a real scene and
rendering at least one first virtual element as if at a position in the real scene
wherein a change in the real point of view causes a corresponding change in rendering the at least one first virtual element such that it remains as if at the position in the real scene;
and
wherein controlling rendering of content to provide a virtual reality scene that is a simulated augmented reality scene that continuously varies with the real point of view of the user, comprises:
rendering content to provide a virtual reality scene that continuously varies with a virtual point of view that has a non-zero offset from the real point of view of a user, wherein the virtual reality scene simulates a real scene from a notional real point of view corresponding to the virtual point of view;
rendering at least one second virtual element at a position in the virtual scene as if at a position in the real scene;
wherein a change in the real point of view causes a corresponding change in the virtual point of view to a new virtual point of view and a corresponding change in rendering the virtual reality scene comprising the at least one second virtual element, wherein the virtual scene simulates the real scene from a new notional real point of view corresponding to the new virtual point of view such that the at least one second virtual element remains at the position in the virtual space as if at the position in the real scene.

12. An apparatus as claimed in any preceding claim, configured, in the second mode, to enable a teleport by enabling a change in the non-zero offset of the point of view defining the simulated augmented reality scene from the real point of view.

13. An apparatus as claimed in claim 12, wherein the change in the non-zero offset is constrained to enable traversal of a continuous real space rather than jumping between disjoint real spaces.

14. A computer program that, when run on a computer, performs:
in a first mode, controlling rendering of content to provide an augmented reality scene that continuously varies with a real point of view of a user; and
in a second mode, controlling rendering of content to provide a virtual reality scene that is a simulated augmented reality scene that continuously varies with the real point of view of the user, wherein the simulated augmented reality scene is defined by a point of view that has a non-zero offset from the real point of view.

15. A method comprising:
in a first mode, controlling rendering of content to provide an augmented reality scene that continuously varies with a real point of view of a user; and
in a second mode, controlling rendering of content to provide a virtual reality scene that is a simulated augmented reality scene that continuously varies with the real point of view of the user, wherein the simulated augmented reality scene is defined by a point of view that has a non-zero offset from the real point of view.
